# EUROPEAN PATENT APPLICATION

(11) **EP 3 650 672 A2**
(43) Date of publication of application: **13.05.2020**
(21) Application number: 19207538.0
(22) Date of filing: 06.11.2019
(51) Int. Cl.: F02B 41/10, F02N 19/00

(54) **METHOD AND SYSTEM FOR STARTING A TURBOCOMPOUNDED ENGINE**

(30) Priority: 08.11.2018 US 201816184299
(71) Applicant: Pratt & Whitney Canada Corp., Longueuil, Québec J4G 1A1 (CA)
(72) Inventor: SCHULZ, Edwin, Longueuil, Québec J4G 1A1 (CA); BELLEVILLE, Francois, Longueuil, Québec J4G 1A1 (CA)
(74) Representative: Dehns

(57) **Abstract**

A method for starting a turbocompounded engine system (10) having an internal combustion engine (12) and a turbomachinery (14) driving a load (18), the method comprising mechanically disengaging the internal combustion engine (12) from at least one of the load (18) and/or the turbomachinery (14) before starting the internal combustion engine (12). The engine (12) is allowed to warm up and then the engine (12) is re-engaged with the at least one of the load (18) and the turbomachinery (14).

## Description

### TECHNICAL FIELD

The application relates generally to a turbocompounded engine operation and, more particularly, to an engine starting method and system for such engines.

### BACKGROUND OF THE ART

Compound cycle engine systems including combustion engines for delivering power remain an area of interest. However, existing systems have various shortcomings relative to the engine starting procedures.

Accordingly, there remains a need for further contributions in the area of technology.

### SUMMARY

In one aspect, there is provided a method of starting a turbocompounded engine system comprising an internal combustion engine and a turbomachinery for driving a load, the method comprising: mechanically disengaging the internal combustion engine from at least one component of the turbomachinery, starting the internal combustion engine; allowing the internal combustion engine to warm up; and then mechanically re-engaging the internal combustion engine with the at least one component of the turbomachinery.

In another aspect, there is provided a method for starting a turbocompounded aircraft engine system having a turbomachinery and an internal combustion engine with a pilot subchamber to initiate combustion of heavy fuel; the method comprising: mechanically decoupling the internal combustion engine from the turbomachinery and/or the load; starting the internal combustion engine without turning the turbomachinery and/or the load; shutting down the internal combustion engine; once the engine speed reaches zero, mechanically engaging the internal combustion engine with the turbomachinery and the load; and then re-starting the internal combustion engine.

In one embodiment of the above, starting the internal combustion engine comprises delivering the heavy fuel in the pilot subchamber, and igniting the heavy fuel in the pilot subchamber.

In one embodiment of the above, the internal combustion engine comprises at least one rotor sealingly received in a housing to define a plurality of main combustion chambers, the pilot subchamber in fluid communication with the main combustion chambers in a sequential manner.

In one embodiment of the above, the method comprises injecting heavy fuel in the main combustion chambers and flowing ignited fuel from the pilot subchamber to ignite the heavy fuel in the main chamber.

In one embodiment of any of the above, the method comprises driving accessories with the internal combustion engine while the internal combustion engine is mechanically disengaged from the load and/or the turbomachinery.

In one embodiment of any of the above, mechanically decoupling the internal combustion engine from the turbomachinery and/or the load comprises decoupling the internal combustion engine from both the turbomachinery and the load.

In a further aspect, there is provided a turbocompounded engine system comprising: an internal combustion engine, a turbomachinery configured to be compounded with the internal combustion engine to drive a load, and a de-coupling mechanism for selectively mechanically decoupling the internal combustion engine from at least one of component of the turbomachinery and/or the load.

### DESCRIPTION OF THE DRAWINGS

Reference is now made to the accompanying figures in which:
Fig. 1 is a schematic view of a turbocompounded engine system including a decoupling mechanism in accordance with a particular embodiment;
Fig. 2 is a schematic cross-sectional view of a part of a rotary internal combustion engine in accordance with a particular embodiment; and
Fig. 3 is a schematic view of a turbocompounded engine system including a decoupling mechanism in accordance with another embodiment;

### DETAILED DESCRIPTION

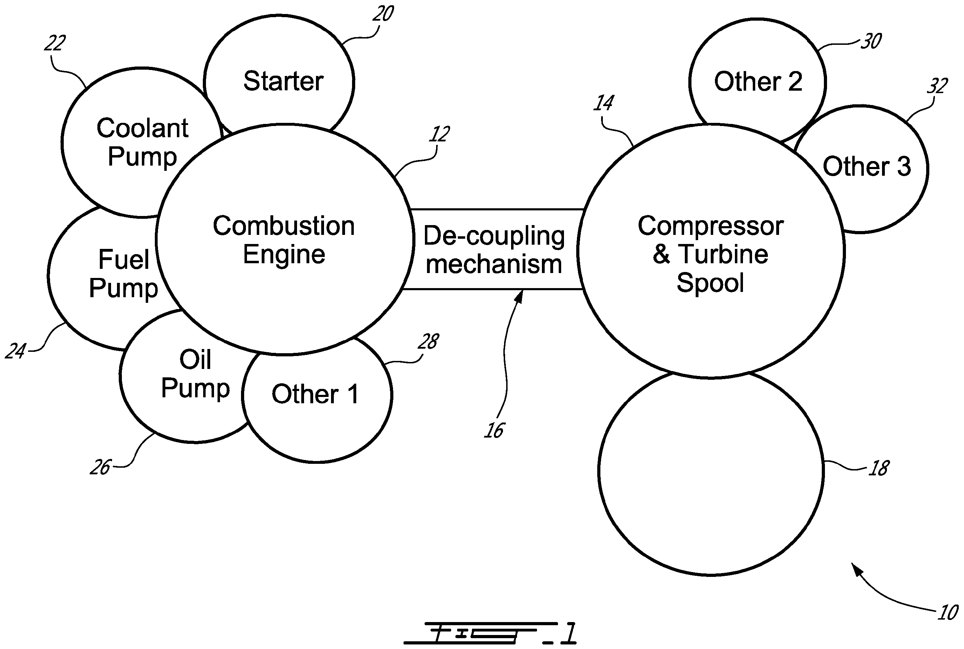

Referring to Fig. 1, an exemplary configuration of a turbocompounded engine system 10 suitable for used in turboshaft applications is schematically shown. The engine 10 generally comprises an internal combustion engine 12 selectively engageable with turbomachinery 14 via a de-coupling mechanism 16 to drive a common load 18 engaged to a power take-off of the engine system 10. As will be seen hereafter, the engine 12 has a staged combustion system that allows the combustion of heavy fuel using a pilot and main injector for a staged combustion. The load can take various forms, including but not limited to a helicopter main rotor, a helicopter tail rotor, one or more generator(s), propeller(s), accessory(ies), rotor mast(s), compressor(s), or any other appropriate type of load or combination thereof. The turbomachinery 14 comprises a compressor section and a turbine section, as for instance described in Lents et al.'s US patent No. 7,753,036 issued July 13, 2010 or as described in Julien et al.'s US patent No. 7,775,044 issued August 17, 2010, or as described in Thomassin et al.'s U.S. patent publication No. 2015/0275749 published October 1, 2015, or as described in Bolduc et al.'s U.S. patent publication No. 2015/0275756 published October 1, 2015. The turbocompounded engine system 10 may be used as a prime mover engine, such as on an aircraft or other vehicle, or in any other suitable application. In any event, in such a system, air is compressed by the compressor section of the turbomachinery 14 before entering the internal combustion engine 12 and the exhaust gases of the internal combustion engine 12 are directed to the turbine section of the turbomachinery 14. Energy from the exhaust gases exiting the internal combustion engine 12 is extracted by the turbine section and the energy extracted by the turbine section is compounded with the internal combustion engine 12 to drive the load 18.

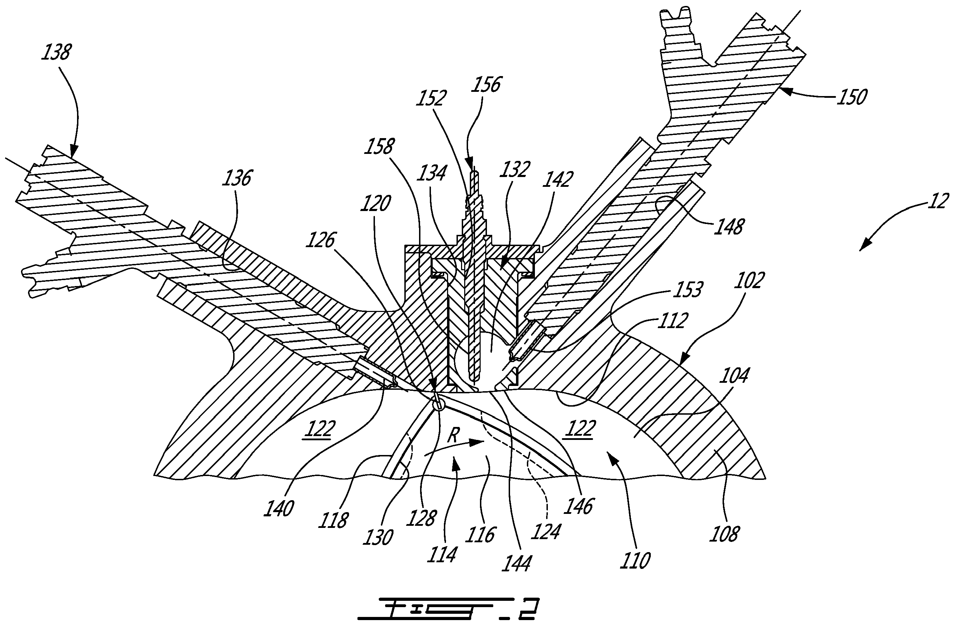

In a particular embodiment, the internal combustion engine 12 is an intermittent internal combustion engine operatively connected to a starter 20, such as an electric starter or the like. The engine 12 may comprise one or more reciprocating pistons or one or more rotary units. Each rotary unit could be configured, for example, as a Wankel engine. Fig 2 illustrates a particular embodiment of such a rotary unit comprising a housing including an outer body 102 having axially-spaced end walls 104 with a peripheral wall 108 extending therebetween to form a rotor cavity 110. An inner surface 112 of the peripheral wall 108 of the cavity 110 has a profile defining two lobes, which is preferably an epitrochoid.

An inner body or rotor 114 is received within the cavity 110, with the geometrical axis of the rotor 114 being offset from and parallel to the axis of the outer body 102. The rotor 114 has axially spaced end faces 116 adjacent to the outer body end walls 104, and a peripheral face 118 extending therebetween. The peripheral face 118 defines three circumferentially-spaced apex portions 120 (only one of which is shown), and a generally triangular profile with outwardly arched sides. The apex portions 120 are in sealing engagement with the inner surface 112 of peripheral wall 108 to form three rotating main combustion chambers 122 (only two of which are partially shown) between the inner rotor 114 and outer body 102. A recess 124 is defined in the peripheral face 118 of the rotor 114 between each pair of adjacent apex portions 120, to form part of the corresponding chamber 122.

The main combustion chambers 122 are sealed. Each rotor apex portion 120 has an apex seal 126 extending from one end face 116 to the other and protruding radially from the peripheral face 118. Each apex seal 126 is biased radially outwardly against the peripheral wall 108 through a respective spring. An end seal 128 engages each end of each apex seal 126, and is biased against the respective end wall 104 through a suitable spring. Each end face 116 of the rotor 114 has at least one arc-shaped face seal 130 running from each apex portion 120 to each adjacent apex portion 120, adjacent to but inwardly of the rotor periphery throughout its length. A spring urges each face seal 130 axially outwardly so that the face seal 130 projects axially away from the adjacent rotor end face 116 into sealing engagement with the adjacent end wall 104 of the cavity 110. Each face seal 130 is in sealing engagement with the end seal 128 adjacent each end thereof.

Although not shown, the rotor 114 is journaled on an eccentric portion of a crankshaft and includes a phasing gear co-axial with the rotor axis, which is meshed with a fixed stator phasing gear secured to the outer body co-axially with the shaft. The shaft rotates with the rotor 114 and the meshed gears guide the rotor 114 to perform orbital revolutions within the stator cavity. The shaft performs three rotations for each rotation of the rotor 114 about its own axis. Oil seals are provided around the phasing gear to prevent leakage flow of lubricating oil radially outwardly thereof between the respective rotor end face 116 and outer body end wall 104.

At least one inlet port (not shown) is defined through one of the end walls 104 or the peripheral wall 108 for admitting air (atmospheric or compressed) into one of the main combustion chambers 122, and at least one exhaust port (not shown) is defined through one of the end walls 104 or the peripheral wall 108 for discharge of the exhaust gases from the main combustion chambers 122. The inlet and exhaust ports are positioned relative to each other and relative to the ignition member and fuel injectors (further described below) such that during one rotation of the rotor 114, each chamber 122 moves around the stator cavity with a variable volume to undergo the four phases of intake, compression, expansion and exhaust, these phases being similar to the strokes in a reciprocating-type internal combustion engine having the four-stroke cycle. The main chamber 122 has a variable volume Vvar varying between a minimum volume Vmin and a maximum volume Vmax.

In a particular embodiment, these ports are arranged such that the rotary engine 10 operates under the principle of the Miller or Atkinson cycle, with its volumetric compression ratio lower than its volumetric expansion ratio. In another embodiment, the ports are arranged such that the volumetric compression and expansion ratios are equal or similar to one another.

An insert 132 is received in a corresponding hole 134 defined through the peripheral wall 108 of the outer body 102, for pilot fuel injection and ignition. The insert 132 has a pilot subchamber 142 defined therein in communication with the rotating main combustion chambers 122. The pilot subchamber 142 communicates with each combustion chamber 122, in turn, when in the combustion or compression phase. In the embodiment shown, the subchamber 142 has a circular cross-section; alternate shapes are also possible. The subchamber 142 communicates with the main combustion chambers 122 in a sequential manner through at least one opening 144 defined in an inner surface 146 of the insert 132. The subchamber 142 has a shape forming a reduced cross-section adjacent the opening 144, such that the opening 144 defines a restriction to the flow between the subchamber 142 and the cavity 110. The opening 144 may have various shapes and/or be defined by a pattern of multiple holes. In a particular embodiment, the subchamber 142 is defined in the outer body 102. For example, in an embodiment where the rotary engine 100 does not include the insert 132.

In a particular embodiment, the volume of the subchamber 142 is at least 0.5% and up to 3.5% of the displacement volume, with the displacement volume being defined as the difference between the maximum and minimum volumes of one chamber 122. In another particular embodiment, the volume of the subchamber 142 corresponds to from about 0.625% to about 1.25% of the displacement volume.

In addition or alternately, in a particular embodiment, the volume of the subchamber 142 is defined as a portion of the minimum combustion volume, which is the sum of the minimum chamber volume Vmin (including the recess 124) and the volume of the subchamber V2 itself. In a particular embodiment the subchamber 142 has a volume corresponding to from 5% to 25% of the minimum combustion volume, i.e. V2 = 5% to 25% of (V2 + Vmin). In another particular embodiment, the subchamber 142 has a volume corresponding to from 10% to 12% of the minimum combustion volume, i.e. V2 = 10% to 12% of (V2 + Vmin). In another particular embodiment, the subchamber 142 has a volume of at most 10% of the minimum combustion volume, i.e. V2 ≤ 10% of (V2 + Vmin).

The peripheral wall 108 has a pilot injector elongated hole 148 defined therethrough, at an angle with respect to the insert 132 and in communication with the subchamber 142. A pilot fuel injector 150 is received and retained within the corresponding hole 148, with the tip 153 of the pilot injector 150 being received in the subchamber 142.

The insert 132 has an ignition element elongated hole 152 defined therein extending along the direction of a transverse axis T of the outer body 102, also in communication with the subchamber 142. An ignition element 156 is received and retained within the corresponding hole 152, with the tip 158 of the ignition element 156 being received in the subchamber 142. In the embodiment shown, the ignition element 156 is a glow plug. Alternate types of ignition elements 156 which may be used include, but are not limited to, plasma ignition, laser ignition, spark plug, microwave, etc.

Although the subchamber 142, pilot injector elongated hole 148 and ignition element elongated hole are shown and described as being provided in the insert 132, it is understood that alternately, one, any combination of or all of these elements may be defined directly in the outer body 102, for example directly in the peripheral wall 108.

The peripheral wall 108 also has a main injector elongated hole 136 defined therethrough, in communication with the rotor cavity 110 and spaced apart from the insert 132. A main fuel injector 138 is received and retained within this corresponding hole 136, with the tip 140 of the main injector 138 communicating with the cavity 110 at a point spaced apart from the insert 132. The main injector 138 is located rearwardly of the insert 132 with respect to the direction R of the rotor rotation and revolution, and is angled to direct fuel forwardly into each of the rotating main combustion chambers 122 sequentially with a tip hole pattern designed for an adequate spray.

The pilot injector 150 and main injector 138 inject heavy fuel, e.g. kerosene (jet fuel), equivalent biofuel, etc. into the pilot subchamber 142 and into the corresponding main chambers 122, respectively. The injected fuel within the pilot subchamber 142 is ignited therein, thus, creating a hot wall around the pilot subchamber 142 and the inner surface 146 of the insert body 132. As the gas pressure with the ignited fuel within the pilot subchamber 142 is increased, a flow of the ignited fuel is partially restricted and directed from the pilot subchamber 142 to the main chamber 122 communicating with it, through the opening 144. The flow of the ignited fuel from the pilot subchamber 142 ignites the fuel injected in the main chamber 122 by the main injector 138.

It can be appreciated that such a fuel injection system allows the combustion of heavy fuel in a rotary engine using a pilot and main injector for a staged combustion system that can burn at higher speed than typical engines burning heavy fuels. In a particular embodiment, the system relies on the pilot subchamber 142 to initiate the combustion with an engine control system programmed in such a way to ensure adequate conditions are achieved for ignition during every combustion event. Such a system, however, results in starts that are longer than a typical internal combustion engine using gasoline as the engine makes use of glow plugs or the like in order to heat the subchamber 142 before the engine starter 20 can be deactivated. So during the starting procedures, it takes longer time on the starter 20 because the subchamber 142 has to be warmed up to a working/operating temperature before the engine starter 20 can be shut off. Accordingly, if the internal combustion engine 12 is connected to the turbomachinery 14 and/or to a high inertia load, such as the main and tail rotors of a rotorcraft (e.g. a helicopter), the starter 20 needs to be oversized to drive all the components that are mechanically engaged with the internal combustion engine 12.

As schematically shown in the exemplary embodiment of Fig. 1, the de-coupling mechanism 16 allows to separate (i.e. mechanically disengaged) the internal combustion engine 12 from the turbomachinery 14 as well as the load 18 (e.g. a helicopter gearbox which drives the helicopter main and tail rotors). Accordingly, the decoupling mechanism 16 can be used to allow the internal combustion engine 12 to be started on its own before being mechanically engaged with the turbomachinery 14 and the load 18. It will be appreciated that by starting the internal combustion engine 12 separately from the other components (e.g. the turbomachinery and the load), the engine starter can be downsized and then once going to ground idle, with all components engaged via mechanism 16, the engine 12 can provide torque to accelerate the whole system at a lower engine speed.

As exemplified in Fig. 1, the de-coupling mechanism allows starting the combustion engine 12 with the engine only driving selected key accessories, such as a coolant pump 22, a fuel pump 24, an oil pump 26, a generator 28, or any other accessories susceptible to being used by an operator while an aircraft is in a hotel mode (i.e. a mode where the aircraft is on the ground with passengers loading so heating, a/c or electric power is needed). The remaining accessories 30, 32 could be drivingly connected to the turbomachinery 14.

The de-coupling mechanism 16 can take various forms. For instance, it can be provided in the form of a mechanical device configured to selectively mechanically disengage the output shaft of the internal combustion engine 12 from the turbomachinery 14 and the load 18. In a particular embodiment, a non-slip clutch also known as a dog clutch could be integrated to a compounding gearbox (not shown) interconnecting the internal combustion engine 12 and the turbine section of the turbomachinery 14 to the load 18. For instance, the clutch could be provided between the output shaft of the engine 12 and an associated input shaft of the gearbox in such a way that the output shaft of the engine is still operable to drive selected accessories like oil pump and coolant pump. In this way, the clutch could be operated to selectively disconnect the output shaft of the internal combustion engine 12 from the gearbox from the turbomachinery 14 and the load 18. A solenoid actuator or a system with hydraulic pressure as a working fluid can be used as part of a de-coupling mechanism (a shaft that moves and engages or disengages splines or gear) in order to separate the mechanical engagement. There type of systems would work for engagement when there is a speed match between two shafts to be engaged or at zero speed.

In operation, the internal combustion engine 12 can be mechanically disengaged from the turbomachinery 14 and the load 18 via de-coupling mechanism 16. Thereafter, the starter 20 can be activated to start the engine 12. As described above, the combustion process is initiated in the pilot subchamber 142 and completed in the main combustion chambers 122 with the flow of the ignited fuel from the pilot subchamber 142 igniting the fuel injected in the main chambers 122. In a particular embodiment, the engine 12 is allowed to warm up and once the subchamber 142 reaches its operating temperature (the combustion system and the oil are also warm) the engine 12 is shut down. When the engine speed reaches zero, the engine 12 is mechanically re-engaged with the turbomachinery 14 and the load 18. The engine starter 20 is then activated for a second time to re-start the engine 12. But now because the combustion system is warm and the subchamber 142 is warm, the ignition will happen at a much lower speed, thereby providing the ability to use the engine 12 to overcome the inertia of all the other components (the turbomachinery 14 and the load 18) that are now engaged with the engine 12. With the warm engine 12, it is now possible to accelerate faster and to downsize the starter for the system.

With systems where the turbomachinery is connected to the output shaft and the turbine of the turbomachinery is able to accelerate with the air flow from the running engine to achieve a speed match with the engine, then the system can be engaged without a friction clutch and without shutting down (dog clutch type system) the combustion engine. However, according to such embodiment, the turbomachinery may have to be sized for speeds close to idle or, alternatively, the idle speed of the engine may have to be raised considerably.

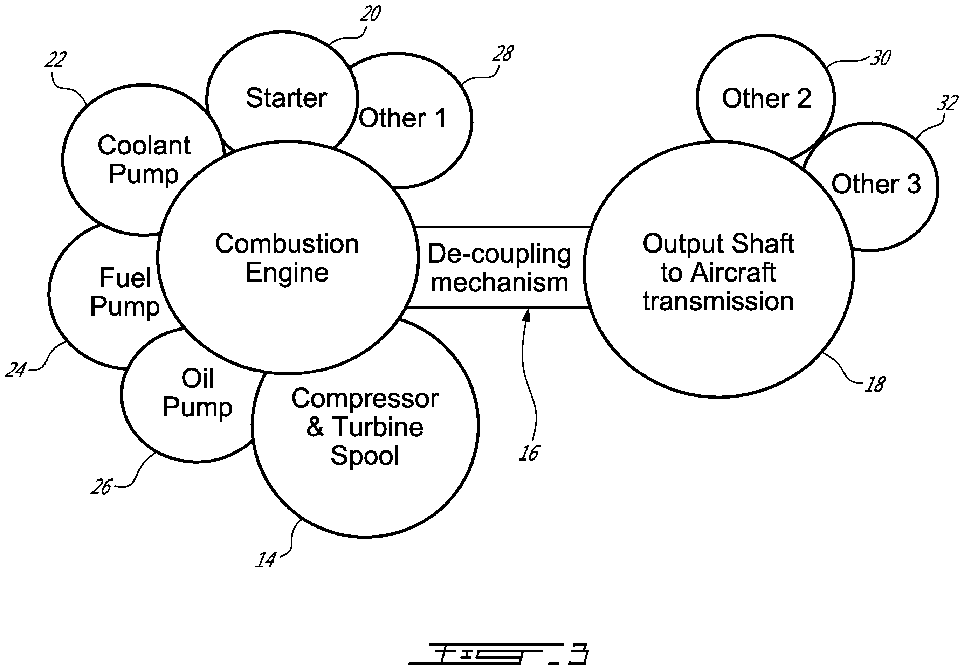

Fig. 3 illustrates another embodiment in which like elements are identified with like reference numerals. The embodiment of Fig. 3 essentially differs from the embodiment of Fig. 1 in that the de-coupling mechanism 16 is provided between the combustion engine 12 and the load to be driven 18 (e.g. the helicopter gearbox). According to this embodiment, the turbomachinery 14 remains mechanically engaged with the combustion engine 12 at all time. It is only the load 18 that is mechanically disengaged from the combustion engine 12 at start. For the particular embodiment illustrated Fig. 3, a second starter or hydraulic system would be needed to accelerate the output shaft to a speed match if it is desired to obtain a speed match between the output shaft of the system and the combustion engine output shaft to avoid having to shut down the engine after the warming up phase.

It is understood that various other configurations are possible. For instance, according to another non-illustrated embodiment, only the turbomachinery 14 could be disengaged from the engine 12 when initially started. Also, the accessories can be distributed as seen fit for operability or packaging purposes.

It is also understood that instead of having the compressor and turbine spool on the same shaft, it is possible to separate the compressor and turbine. This means that the compressor could be driven by the combustion engine and the turbine could be decoupled. This configuration may be suitable for not having to shut down the combustion engine before engaging as described above.

In accordance with a particular embodiment, there is provided a method for starting a turbocompounded aircraft engine system having a turbomachinery and an internal combustion engine with a pilot subchamber to initiate combustion of heavy fuel, the turbomachinery compounding with the internal combustion engine to drive a load, the method comprises: mechanically decoupling the internal combustion engine from the turbomachinery and/or the load for starting. The internal combustion engine is started on its own and is allowed to warm up without turning the turbomachinery and/or the load (e.g. aircraft main transmission, main rotor and tail rotor). The internal combustion engine is, however, connected via the gearbox (or direct on crankshaft) to accessories (e.g. fuel pump, coolant pump, oil pump, starter/generator, etc.) and, thus, can be run in this mode to generate power and warm up before flight. Once the operator wants to take off, the internal combustion engine is shut down and immediately when the engine speed reaches zero, it is mechanically engaged to the turbomachinery as well as the aircraft transmission and rotors. The engine starter is then activated for a second time, but this time the turbomachinery and aircraft transmission/rotors are accelerated with the help of the internal combustion engine. The engine is warm and, thus, produces torque at a much lower speed, and therefore it aids in the start of the engaged system, allowing the engine to reach ground idle condition in a shorter amount of time.

According to another particular embodiment, there is provided a method of starting a turbocompounded engine system comprising an internal combustion engine and a turbomachinery for driving a load. The method comprising: mechanically disengaging the internal combustion engine from at least one of the load and the turbomachinery, starting the internal combustion engine; allowing the internal combustion engine to warm up; and then mechanically re-engaging the internal combustion engine with the at least one of the load and the turbomachinery.

In a particular embodiment, starting the engine separately from the other components (e.g. turbomachinery) through the use of the de-coupling mechanism allows to minimize the compounding gearbox complexity, starter size as well as fuel consumption in certain conditions. It provides for a better operability of the turbocompounded engine system.

The above description is meant to be exemplary only, and one skilled in the art will recognize that changes may be made to the embodiments described without departing from the scope of the invention disclosed. Modifications which fall within the scope of the present invention will be apparent to those skilled in the art, in light of a review of this disclosure, and such modifications are intended to fall within the appended claims.

## Claims

1. A method of starting a turbocompounded engine system (10) comprising an internal combustion engine (12) and a turbomachinery (14) for driving a load (18), the method comprising:
mechanically disengaging the internal combustion engine (12) from at least one component of the turbomachinery (14);
starting the internal combustion engine (12);
allowing the internal combustion engine (12) to warm up; and
then mechanically re-engaging the internal combustion engine (12) with the at least one component of the turbomachinery (14).

2. The method of claim 1, further comprising shutting down the internal combustion engine (12) before mechanically engaging the internal combustion engine (12) with the at least one component of the turbomachinery (14).

3. The method of claim 2, further comprising re-starting the internal combustion engine (12) after mechanically engaging the internal combustion engine (12) with the at least one component of the turbomachinery (14).

4. The method of claim 1, 2 or 3, further comprising driving accessories (22, 24, 26, 28) with the internal combustion engine (12) while the internal combustion engine (12) is mechanically disengaged from the at least one component of the turbomachinery (14).

5. The method of any preceding claim, wherein starting the internal combustion engine (12) comprises delivering heavy fuel in a pilot subchamber (142), and igniting the heavy fuel in the pilot subchamber (142) to initiate combustion.

6. The method of claim 5, wherein the internal combustion engine (12) is a rotary engine including at least one rotor (114) sealingly received in a housing (102) to define a plurality of main combustion chambers (122), the pilot subchamber (142) in fluid communication with the main combustion chambers (122) in a sequential manner.

7. The method of claim 5 or 6, comprising warming up the pilot subchamber (142) to an operating temperature, shutting down the internal combustion engine (12) after the operating temperature of the pilot subchamber (142) has been reached, and then restarting the internal combustion engine (12) with the load (18) and the turbomachinery (14) mechanically engaged with the internal combustion engine (12).

8. The method of claim 7, wherein the turbocompounded engine system (10) is a turboshaft, the load (18) including a helicopter rotor drivingly connected to a helicopter gearbox.

9. The method of any of claims 1 to 4, wherein the internal combustion engine (12) comprises a pilot subchamber (142) fluidly connected to a main combustion chamber (122), and starting the internal combustion engine (12) comprises activating a starter (20) operatively connected to the internal combustion engine (12), delivering heavy fuel in a pilot subchamber (142) in fluid communication with a main combustion chamber (122), igniting the heavy fuel in the pilot subchamber (142), warming up the pilot subchamber (142) to an operating temperature, and shutting off the starter (20) once the operating temperature has been reached.

10. A turbocompounded engine system (10) comprising:
an internal combustion engine (12);
a turbomachinery (14) configured to be compounded with the internal combustion engine (12) to drive a load (18); and
a de-coupling mechanism (16) for selectively mechanically decoupling the internal combustion engine (12) from at least one component of the turbomachinery (14).

11. The turbocompounded engine system (10) of claim 10, wherein the internal combustion engine (12) comprises a pilot subchamber (142) to initiate combustion.

12. The turbocompounded engine system (10) of claim 11, wherein the internal combustion engine (12) comprises at least one rotor (114) sealingly received in a housing (102) to define a plurality of main combustion chambers (122), the pilot subchamber (142) in fluid communication with the main combustion chambers (122) in a sequential manner.

13. The turbocompounded engine system (10) of claim 10, 11 or 12, wherein the de-coupling mechanism (16) is provided between the turbomachinery (14) and the internal combustion engine (12).

14. The turbocompounded engine system (10) of any of claims 10 to 13, wherein the de-coupling mechanism (16) is provided between the load (18) and the internal combustion engine (12), the internal combustion engine (12) remaining mechanically engaged with the at least one component of the turbomachinery (18) when the internal combustion engine (12) is mechanically disengaged from the load by the de-coupling mechanism (16).
